# EUROPEAN PATENT APPLICATION

(11) **EP 1 273 490 A1**
(43) Date of publication of application: **08.01.2003**
(21) Application number: 02006537.1
(22) Date of filing: 19.03.2002
(51) Int. Cl.: B60R 21/26, B60R 21/16, B60R 21/20, F16L 55/027, F16L 11/15

(54) **Airbag module with gas supply line**

(30) Priority: 28.06.2001 DE 10131286
(71) Applicant: Breed Automotive Technology, Inc., Lakeland, FL 33807-3050 (US)
(72) Inventor: Wackenroder, Thilo, 65817 Eppstein (DE); Volkman, Matthias, 61476 Kronberg (DE)
(74) Representative: Müller-Boré & Partner Patentanwälte

(57) **Abstract**

The invention relates to a gas supply line for an airbag module for connecting a gas generator (18) to an airbag, which comprises in its inside at least one flow-conducting element (8; 16), which is designed in such a way that it creates a twist in a linear flow through the gas supply line (2; 10), as well as a gas supply device and an airbag module comprising this type of gas supply line.

## Description

The invention relates to a gas supply line for an airbag module, a gas supply device as well as a corresponding airbag module.

Airbag modules essentially consist of two components, an airbag or gasbag and a gas generator. Due to the spatial arrangement in a motor vehicle, it is not always possible to arrange the airbag directly on the gas generator. This concerns in particular so-called curtain airbag modules, in which an airbag in its inflated state extends in the vehicle from the lateral roof beam essentially over the entire vehicle side. These airbags thus extend to the sides of the heads of the vehicle occupants along the vehicle side or side window panes. In these airbag modules, the gas generator is generally arranged in the region of column C or in the roof region of a motor vehicle. Originating from the gas generator, a gas supply line then projects into the airbag. In the event of a crash, the gas generator is ignited and the thus generated gas flows into the airbag via the gas supply line. On the basis of this arrangement, the gas must travel a relatively long distance from the gas generator to the airbag, which delays the inflation and unfolding of the airbag. In order to compensate for this, gas supply lines with a relatively large cross section need to be used and a large gas volume is required, which in turn requires large gas generators.

It is the object of the invention to provide a gas supply line for an airbag module, as well as a gas supply device and an airbag module, which enable a more rapid and more efficient inflation of an airbag.

This object is achieved by a gas supply line with the characterising features of claim 1, a gas supply device with the characterising features of claim 7 and an airbag module with the characterising features of claim 12. Preferred embodiments arise from the corresponding subclaims.

The gas supply line for an airbag module according to the invention is used to connect a gas generator with an airbag, in particular an airbag of a curtain airbag module. The gas supply line is preferably designed in the shape of a tube or hose. At least one flow-conducting or flow-steering element is arranged in the inside of the gas supply line. This elements acts in a flow-steering manner upon a gas, which flows in essentially the longitudinal direction, i.e. linearly through the gas supply line. The element is designed to be flow-steering in such a manner that a twist is created in the flow, i.e. in addition to its linear movement, the flow also undergoes a rotatory movement. This twist causes an improved laminar flow with fewer turbulences in the gas supply line. This is particularly valid for the regions of the gas supply line in which cross section changes are required, for instance due to connecting pieces. Overall thus, a significantly lower flow resistance in the gas supply line can be achieved. This ensures a more rapid flow or a higher gas flow rate in the gas supply line, so that an airbag can be more rapidly inflated with gas. For this reason, the overall required gas volume can also be reduced. In addition this enables the use of smaller gas generators, which is an advantage with regard to spatial relations in a motor vehicle and for reasons of cost. Since the airbag is more rapidly filled or inflated due to the more rapid gas flow and its lower flow resistance through the gas supply line, the required protective effect for a vehicle occupant can also be ensured sooner. It is furthermore possible to reduce the gas supply line in its cross section, whereby the entire airbag module can be designed to be smaller and more compact.

Preferably on at least one section of the inner side of the gas supply line, at least one projection running in the longitudinal direction of the gas supply line in a spiral manner is designed as a flow-conducting element. The projection runs for instance in the shape of a rib or groove in a spiral manner along the wall of the gas supply line. As a result, the flow is made to rotate along the wall. In this way a twist is created in the flow in the gas supply line, which improves the flow relations in such a way that an increased gas flow rate is achieved through the gas supply line.

The projection is preferably formed by an inwardly pointing bulge of an outer wall of the gas supply line. This means that the outer wall of the gas supply line is inwardly caved or indented in a spiral manner. This can be achieved through reshaping a cylindrical tube out of metal or synthetic material, for instance. It is preferable, however, that the entire gas supply line is made by blow moulding synthetic material. In this way, any form of groove or contour of the tube inner surface can easily be created. The tube inner surface can be given a specific contour, in order to direct or guide the flow and to create a twist in the gas supply line.

Preferably, a projection extends in a spiral manner along the inner side of the gas supply line. This projection can preferably extend over the entire length of the gas supply line. In this case it forms a spiral-shaped winding on the inner side of the gas supply line, in the manner of a screw thread. The incline or division of this spiral-shaped winding can be adjusted in such a way that a desired twist is created. The more drawn-out the spiral, i.e. the larger the incline, the lower the twist of a flow in the gas supply line is. Depending on the length of the gas supply line, the projection can form several complete windings in the gas supply line or extend along merely part of the circumference on the inner side of the gas supply line. The projection can be designed to be continuous or in sections on the inner side of the gas supply line, so that a type of guide vane is created.

It is furthermore preferred that several projections extend preferably parallel to each other on the inner side of the gas supply line in a spiral manner. This configuration is preferred in particular in the case of drawn-out projections, which do not form a complete winding over the entire circumference of the gas supply line. As a result, on all circumference sections of the gas supply line, flow-steering means can be created, which generate an even twist. To create an even flow or flow rotation, it is preferred that the several projections run parallel to one another.

In a further preferred embodiment, at least in one section of the gas supply line, in which the flow-conducting element is foreseen, a gas generator can be arranged in such a manner that it extends in the longitudinal direction of the gas supply line, a gas escape opening is arranged at a back end of the gas generator as seen from the flow direction, and between an outer wall of the gas generator and the inner side of the gas supply line a flow passage is defined, in which the flow-conducting element extends. In this arrangement the gas flows out of the back end of the gas generator as seen from the flow direction and then flows parallel to the outer wall of the gas generator along the latter. It flows through an annular flow channel, which is defined between the outer wall of the gas generator and the inner side of the gas supply line. Since in this flow channel, the flow-conducting or flow-steering element is arranged on the inner side of the gas supply line, the gas flowing in the longitudinal direction through the gas supply line is made to rotate, i.e. it is given a twist. This twist improves, as described above, the flow relations in such a manner that a more rapid flow and lower flow resistance can be created in the gas supply line. The arrangement of the oblong gas generator, which is preferably circular in cross section, within the gas supply line enables a very compact configuration of an entire airbag module. The flow-conducting element is preferably designed as at least one spiral-shaped projection on the inner side of the gas supply line and/or the outer side of the gas generator. The design as a projection enables a simple creation of a flow-conducting element, preferably integral or designed as one piece with the inner wall of the gas supply line and/or the outer wall of the gas generator.

The gas supply device according to the invention for an airbag module comprises a gas generator and a gas supply line in accordance with the above description. A gas supply device of this type enables a rapid and loss-free gas supply into an airbag. For this reason, the required gas volume and thus the size of the gas supply device and the gas generator can be reduced. This is advantageous in terms of spatial relations on the one hand and for reasons of cost on the other hand.

Preferably a first end of the gas supply line is connected to the gas generator and a second end of the gas supply line can be connected to an airbag. The gas supply line, which has been optimised with regard to flow, thus enables a rapid and low resistance gas supply from the gas generator to an airbag.

In an alternative embodiment, a first end of the gas supply line is closed and a gas generator is arranged on the inside of the gas supply line in such a manner that it extends in the longitudinal direction of the gas supply line, whereby at least one gas escape opening of the gas generator is arranged adjacent to the closed end of the gas supply line, and between an outer wall of the gas generator and the inner side of the gas supply line a flow passage is defined in which the flow-conducting element of the gas supply line extends at least in sections, and a second end of the gas supply line can be connected to a further gas supply line and/or an airbag. In this arrangement the gas generator and the gas supply line display a corresponding cross section. Preferably they both display a circular cross section. The gas generator extends on the inside of the gas supply line in its longitudinal direction. The gas generator in this case is arranged in such a manner that its gas escape opening is arranged on a back end of the gas generator and the gas supply line as seen from the flow direction. The gas escape opening is arranged in the proximity of the closed end. On the basis of this arrangement, the gas generated by the gas generator initially flows along the outer wall of the gas generator in a flow passage, which is defined between the inner wall of the gas supply line and an outer wall of the gas generator. In this flow passage, at least one flow-conducting element is arranged in such a manner, that a twist is created in the linear flow, i.e. the flow moves through the gas supply line in a rotating manner in the longitudinal direction of the gas supply line with regards to its inner wall. This twist or this rotation of the flow improves the efficiency of the gas supply, since a preferred laminar flow with fewer turbulences can be created. The entire flow takes place with little resistance, so that a more rapid inflation of the airbag with gas can be achieved. The other open end of the gas supply line is connected either directly to an airbag or to a further gas supply line. In the latter case, the gas supply line, which surrounds the gas generator, can be designed in the shape of a second housing or a casing of the gas generator. This casing comprises at its open end a projecting piece, which can be connected to a further gas supply line. Such a second housing or such a casing is preferably made out of reshaped metal, but can also be made out of synthetic material.

The flow-conducting element is preferably designed as at least one spiral-shaped projection on the inner side of the gas supply line and/or on the outer side of the gas generator. The design as a spiral-shaped projection on the inner side of the gas supply line corresponds to the above-described configuration. Alternatively or additionally, a spiral-shaped projection can also be designed on the outer side of the gas generator, so that it at least partly winds around the gas generator in the longitudinal direction. A projection of this type can be secured to the outer wall of the gas generator as a separate component. Alternatively, it can be designed in the shape of a bulge or dent of the gas generator housing. It is furthermore conceivable that, in the clearance or flow passage between the outer wall of the gas generator and the inner side of the gas supply line, flow-conducting elements are arranged, for instance in the shape of guide vanes.

It is furthermore preferred that the gas escape opening is arranged radially on the gas generator. This arrangement favours a rapid inflow of gas in the flow passage between the outer wall of the gas generator and the inner side of the gas supply line. Furthermore an escape of the gas out of the gas generator in the latter's longitudinal direction is avoided, which would cause an undesired repulsion force on the gas generator. In this way an acceleration of the gas generator in the linear direction due to the rapidly escaping gas can be avoided. It is particularly preferred if several gas escape openings are evenly distributed over the circumference of the gas generator, so that the repulsion forces of the escaping gas can counterbalance each other and thus an acceleration of the gas generator is avoided. Alternatively or additionally, one or several gas escape openings can be foreseen, enabling an axial escape of the gas out of the gas generator.

The airbag module according to the invention comprises an airbag and a gas supply device, as described above. An airbag module of this type has the advantage over known airbag modules that the airbag can be inflated significantly more rapidly and more efficiently. It is thus possible to produce a smaller design of the entire gas supply device including the gas generator, enabling a more compact and cost-effective design of the entire airbag module.

The airbag module is preferably designed as a curtain airbag module. In a curtain airbag module of this type, the configuration of the gas generator according to the invention is particularly advantageous. In airbag modules of this type, the gas generator is generally arranged at a distance from the airbag and it is desirable that the gas generated by the gas generator is introduced into the airbag as rapidly as possible.

The invention will be described by way of example with reference to the figures, in which:
Fig. 1 shows a gas supply line according to a first embodiment of the invention;
Fig. 2 shows a cross sectional view of the gas supply line of Fig. 1 along line A-A;
Fig. 3 shows a cross sectional view of the gas supply line of Fig. 1 along line B-B;
Fig. 4 shows a cross sectional view of the gas supply line of Fig. 1 along line C-C;
Fig. 5 shows a gas supply device according to a preferred embodiment of the invention;
Fig. 6 shows a longitudinal section of the gas supply device according to Fig. 5;
Fig. 7 shows a cross sectional view of the gas supply device according to Fig. 5 and 6 along line A-A;
Fig. 8 shows a cross sectional view of the gas supply device according to Figs. 5 and 6 along line B-B;
Fig. 9 shows a cross sectional view of the gas supply device according to Figs. 5 and 6 along line C-C; and
Fig.10 shows a diagrammatic representation of a filter effect in the gas supply line according to the invention.

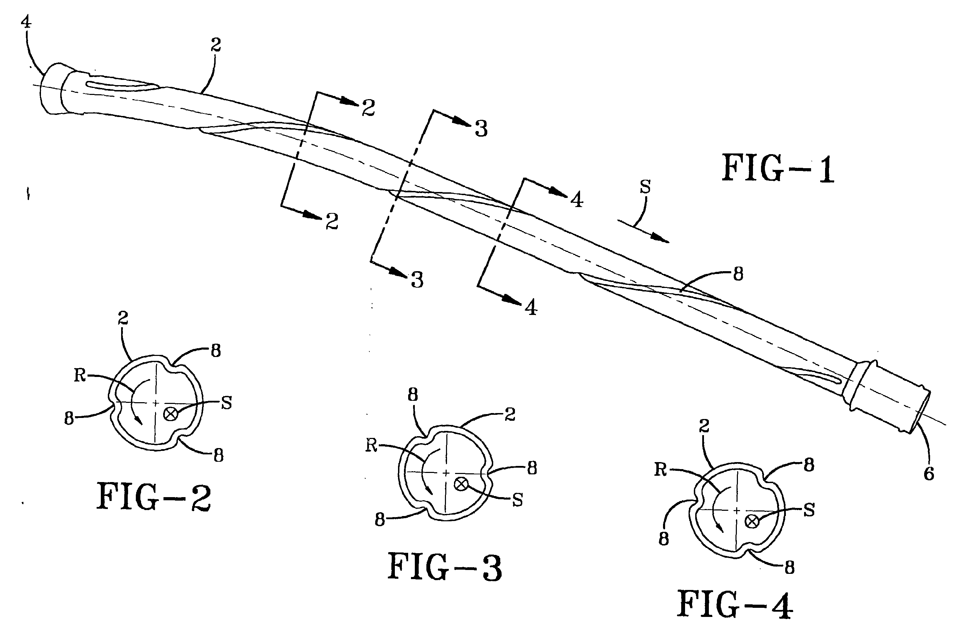

Fig. 1 shows a first embodiment of the gas supply line 2 according to the invention. The gas supply line 2 is designed to be essentially hose- or tube-shaped with a preferably essentially circular cross section. Other cross section shapes, however, for instance an oval cross section, are conceivable. A first end 4 of the gas supply line 2 is connected to a gas generator. The second end 6 of the gas supply line 2 is connected to an airbag. The ends 4, 6 are designed in the shape of connecting pieces, which can be secured to the airbag or the gas generator by means of clamps, for instance. Alternatively, this fastening can be ensured by means of other suitable joining processes, for instance by soldering, welding, gluing, screwing, injection moulding, or the like. A spiral-shaped dent or bulge 8 extends over the entire length of the gas supply line 2. This groove-shaped dent 8 is pointed inwardly on the outer side and on the inner side of the gas supply line 2 it defines a correspondingly spiral-shaped projection, which extends over the entire length of the gas supply line 2 in a screw-shaped manner.

When gas enters from the gas generator into the first end 4 in the gas supply line 2, it flows through the gas supply line 2 in the flow direction S. The projection 8 on the inner wall then creates a twist or a rotation in the linear flow, i.e. in the flow direction S. The gas flow runs along the spiral-shaped projection 8. In this way a very even and preferably laminar flow with only little resistance and few turbulences is achieved. The gas supply line 2 can be made out of reshaped metal, for instance. The gas supply line 2 is, however, preferably made out of synthetic material, for instance by blow moulding. In this manufacturing procedure, it is easy to create as many spiral-shaped bulges or projections 8 as desired for the steering and guiding of the gas flow in the inside of the gas supply line 2.

Figs. 2 to 4 show cross sections along lines A-A, B-B and C-C of Fig. 1. In these cross sections, it can be seen that the gas supply line 2 displays an essentially circular cross section. The inwardly pointing bulges 8 of the wall of the gas supply line 2 form projections on the inside, which guide or conduct the gas flow. Due to the spiral-shaped course of the bulges 8, a twist or a rotation of the flow is created in the direction R. In the present case, the spiral-shaped bulges 8 in the flow direction S run in an anti-clockwise manner, so that the rotation direction R also runs anti-clockwise. The winding of the bulge 8 can, however, also run in the opposite direction, i.e. clockwise, so that a twist or a rotation of the flow is created in the clockwise direction. Whereas Fig. 1 shows only one spiral-shaped bulge 8, which winds itself several times around the gas supply line 2 over the entire length of the latter, in Figs. 2 to 4 three bulges 8 are shown in the wall of the gas supply line 2. In these cases, three wound, spiral-shaped bulges 8 run over the entire length of the gas supply line 2. The three bulges 8 in this case run preferably essentially parallel to each other, i.e. the spirals defined by them display the same inclines. Through the arrangement of several bulges, i.e. several projections on the inside of the gas supply line 2, an even more improved guiding or steering of the flow can be achieved.

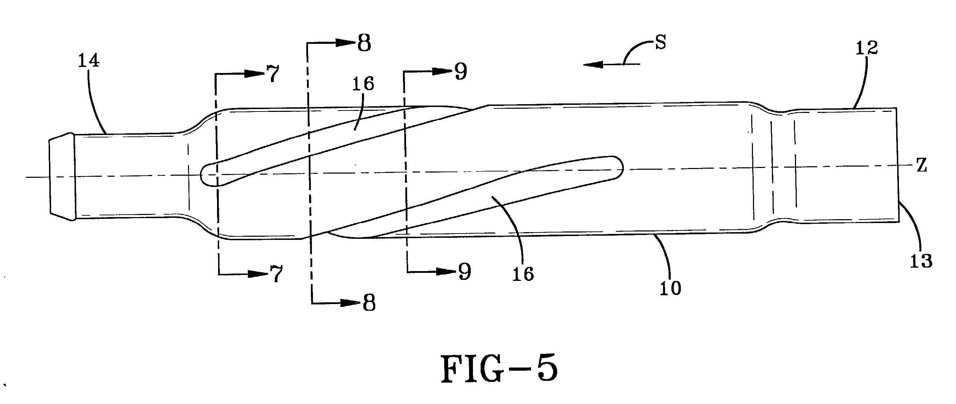

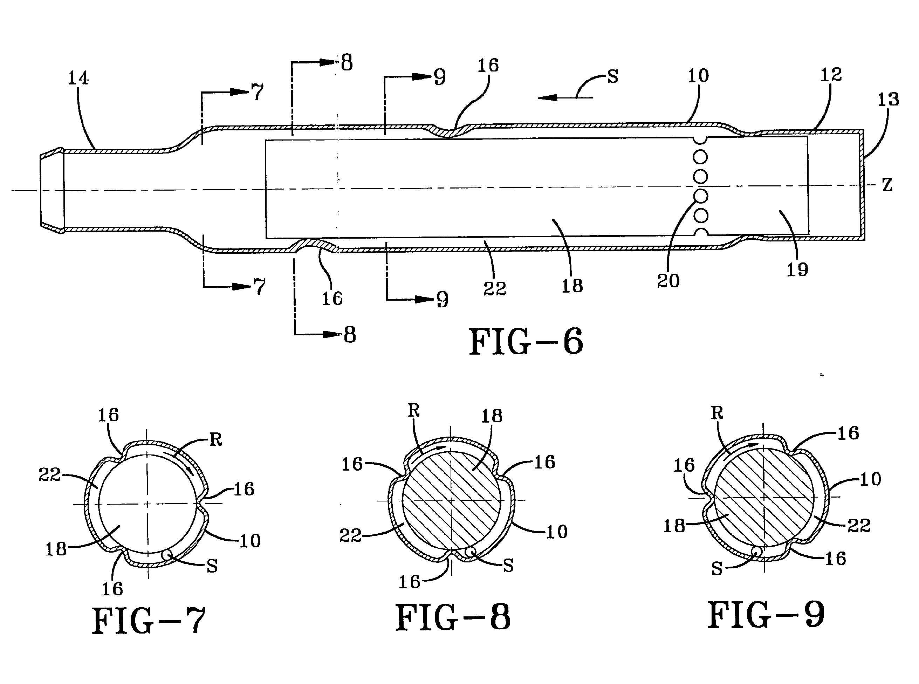

Fig. 5 shows a further preferred embodiment of the gas supply device according to the invention. In this case, the gas supply line is designed as an outer housing 10 for a gas generator. The housing is essentially tube-shaped and displays a preferably circular cross section, whereby other cross section shapes, however, are conceivable. A first end 12 of the housing 10 is designed as being closed on its frontal side 13. The first end 12 is designed to be tapered, in order to clamp a gas generator on its inside (see Fig. 6). The second, opposite end 14 of the housing 10 is designed to be open. The second end 14 is also tapered and has the shape of a connecting piece for connecting with a gas supply hose, which the gas supply device connects to an airbag according to Fig. 5. On the outer side of the housing 10, in its middle region, dents or groove-shaped recesses 16 are designed. These recesses form bulges, which point inwardly and form corresponding projections on the inner side of the housing 10. The dents 16 extend in an essentially spiral-shaped manner in the flow direction S along the housing 10. Several indentations or dents 16 are foreseen, which extend essentially parallel to each other. The dents 16 in each case do not perform a complete rotation around the housing 10, but extend along merely part of the circumference. The strength of the twist created in the flow depends on the magnitude of the inclination of the dents 16 with regard to the longitudinal axis Z. The lower the incline of the spiral-shaped dents 16, the stronger the created twist in the inside of the housing 10. The housing 10 can preferably be made out of reshaped metal, but can also be made out of synthetic material.

Fig. 6 shows a longitudinal section through a gas supply device according to Fig. 5. On the inside of the housing 10 a gas generator 18 is arranged. The gas generator 18 displays an oblong shape and its cross section essentially corresponds to that of the housing 10, whereby the gas generator 18 displays a smaller cross section. The gas generator 18 preferably also displays a circular cross section. A first end 19 of the gas generator 18 is secured in the housing 10 in the region of the first end 12, preferably by clamping. Close to this first end 19 of the gas generator 18, the latter comprises radially pointing gas escape openings 20. Between the outer wall of the gas generator 18 and the inner wall of the housing 10, a flow passage 22 is formed. The bulges or dents 16 project into this flow passage 22, where they define spiral-shaped projections 16. If the gas generator 18 is ignited, gas flows from the gas escape openings 20 radially out of the gas generator 18 into the flow passage 22. There the gas flow is diverted and it flows in the flow direction S. Due to the spiral-shaped projections 16, which extend in the flow passage 22, the initially linear flow of the gas is made to rotate, i.e. it undergoes a twist. The rotating flow continues to flow through the housing 10 and through the end 14 into a further gas supply line or a gas supply hose (not represented), which connects the gas supply device to an airbag. In the embodiment shown here, the projections 16 of the housing 10 extend to the outer wall of the gas generator 18. The inwardly or outwardly pointing dents 16 can, however, be designed to be smaller, so that they define projections on the inside of the housing 10, which do not extend to the outer wall of the gas generator 18. Alternatively or additionally, spiral-shaped projections can also be designed on the outer wall of the gas generator 18. Other flow-steering means can also be arranged in the flow passage 22, creating a twist in the flow.

Figs. 7 to 9 show cross sections along lines A-A, B-B and C-C of Figs. 5 and 6. The housing 10 and the gas generator 18 both display an essentially circular cross section, whereby the diameter of the gas generator 18 is smaller. In this way, between the inner wall of the housing 10 and the outer wall of the gas generator 18, an annular flow passage or flow channel 22 is defined. The dents 16 extend into this flow passage 22. In this embodiment, three spiral-shaped dents 16 are foreseen (see Fig. 5). A smaller or larger number of dents, however, can also be foreseen, which extend at least in sections over the length of the housing 10. On the basis of the flow direction S from the first end 12 to the second end 14 and the direction of the spiral-shaped windings of the dents 16, in the present case a twist with an anti-clockwise rotation direction R is achieved. The windings of the spiral-shaped dents 16 can, however, also run in the opposite direction, so that a twist is achieved in the clock-wise direction.

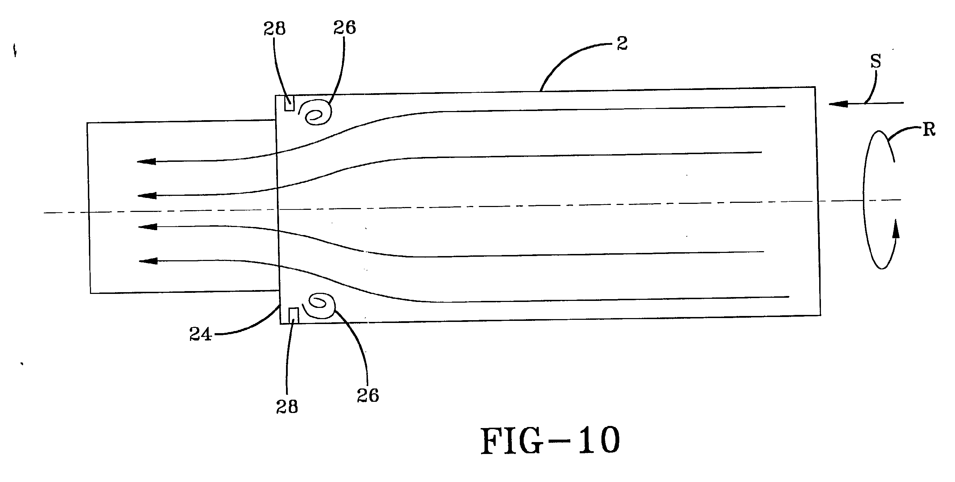

Fig. 10 is a diagrammatic representation of how a filter effect can be achieved by means of the gas supply line 2 according to the invention. In this case particles can be partitioned from the gas and kept back, so that they cannot enter the airbag. In the gas supply line 2, as described above, flow-conducting elements or projections (not shown in Fig. 10) are arranged, which ensure that in the flow S a twist is created in the direction R around the longitudinal axis of the gas supply line 2. In the gas supply line a step or cross section narrowing 24 is foreseen. This step-shaped cross section narrowing 24 forms corners or angles, in which a dead space or turbulences 26 are created. The particles 28 move in the rotating flow on the basis of their increased mass and of the centrifugal force acting upon them along the inner side of the gas supply line 2. When they reach the step 24, the particles do not enter the narrowed tube region, instead they are collected and kept back on the step 24 in the dead space 26. Due to this particle interception, the flow resistances of the gas flow are further reduced, since the friction of the gas flow caused by the particles can be reduced or eliminated. Friction losses in the flow are thus minimised.

In the shown embodiments, the flow-conducting or flow-guiding projections 16 (projections 8 in Figs. 1 to 4) are created by indentations or dents of the wall of the gas supply line. Alternatively, however, solid projections on the inner side of the wall can also be designed by suitable manufacturing methods.

### LIST OF REFERENCE NUMERALS

- 2: gas supply line
- 4: first end
- 6: second end
- 8: dent
- 10: housing
- 12: first end
- 13: frontal side
- 14: second end
- 16: dents
- 18: gas generator
- 19: first end of the gas generator
- 20: gas escape openings
- 22: flow passage
- S: flow direction
- R: rotation direction
- Z: longitudinal axis

## Claims

1. Gas supply line for an airbag module for connecting a gas generator (18) to an airbag, which comprises in its inside at least one flow-conducting element (8; 16), which is designed in such a way that it creates a twist in a linear flow through the gas supply line (2; 10).

2. Gas supply line according to claim 1, in which in at least one section of the inner side of the gas supply line (2; 10), at least one projection (8; 16) extending in the longitudinal direction of the gas supply line (2; 10) in a spiral-shaped manner, is arranged.

3. Gas supply line according to claim 2, in which the projection (8; 16) is formed by an inwardly pointing bulge of an outer wall of the gas supply line (2; 10).

4. Gas supply line according to claim 2 or 3, in which a projection (8; 16) extends in a spiral-shaped manner along the inner side of the gas supply line (2; 10).

5. Gas supply line according to one of claims 2 to 4, in which several projections (8; 16) extend preferably parallel to each other in a spiral-shaped manner along the inner side of the gas supply line (2; 10).

6. Gas supply line according to one of the preceding claims, in which at least in one section of the gas supply line (10), in which the flow-conducting element (16) is foreseen, a gas generator (18) can be arranged in such a manner that it extends in the longitudinal direction (Z) of the gas supply line (10), a gas escape opening (20) is arranged at a back end (19) of the gas generator (18) as seen from the flow direction (S), and between an outer wall of the gas generator (18) and the inner side of the gas supply line (10) a flow passage (22) is defined, in which the flow-conducting element (16) extends.

7. Gas supply device for an airbag module comprising a gas generator (18) and a gas supply line (2; 10) according to one of the preceding claims.

8. Gas supply device according to claim 7, in which a first end (4) of the gas supply line (2) is connected with a gas generator and a second end (6) of the gas supply line (2) can be connected with an airbag.

9. Gas supply device according to claim 7, in which a first end (13) of the gas supply line (10) is closed and a gas generator (18) is arranged on the inside of the gas supply line (10) in such a manner that it extends in the longitudinal direction (Z) of the gas supply line (10), whereby at least one gas escape opening (20) of the gas generator (18) is arranged adjacent to the closed end (13) of the gas supply line (10), and between an outer wall of the gas generator (18) and the inner side of the gas supply line (10) a flow passage (22) is defined in which the flow-conducting element (16) of the gas supply line (10) extends at least in sections, and a second end (14) of the gas supply line (10) can be connected to a further gas supply line and/or an airbag.

10. Gas supply device according to claim 9, in which the flow-conducting element (16) is designed as at least one spiral-shaped projection on the inner side of the gas supply line (10) and/or the outer side of the gas generator (18).

11. Gas supply device according to claim 9 or 10, in which the gas escape opening (20) is arranged radially on the gas generator (18).

12. Airbag module comprising an airbag and a gas supply device according to one of claims 7 to 11.

13. Airbag module according to claim 12, in which the airbag module is designed as a curtain airbag module.
